# EUROPEAN PATENT SPECIFICATION

(11) **EP 4 325 441 B1**
(45) Date of publication and mention of the grant of the patent: **07.10.2026**
(21) Application number: 23191515.8
(22) Date of filing: 15.08.2023
(51) Int. Cl.: G06V 10/764

(54) **METHOD AND ELECTRONIC DEVICE FOR OBJECT DETECTION, AND COMPUTER-READABLE STORAGE MEDIUM**
VERFAHREN UND ELEKTRONISCHE VORRICHTUNG ZUR OBJEKTERKENNUNG UND COMPUTERLESBARES SPEICHERMEDIUM
PROCÉDÉ ET DISPOSITIF ÉLECTRONIQUE DE DÉTECTION D'OBJET, ET SUPPORT D'INFORMATIONS LISIBLE PAR ORDINATEUR

(30) Priority: 17.08.2022 TW 111131021
(43) Date of publication of application: 21.02.2024
(73) Proprietor: Solomon Technology Corporation, Taipei City 11494 (TW)
(72) Inventor: CHEN, Cheng-Lung, Taipei City (TW); YAO, Ying, Taipei City (TW); NGUYEN, Xuan Loc, Taipei City (TW); PHAM, Ha Trung, Taipei City (TW); BRILIAN, Tafjire Nugraha, Taipei City (TW)
(74) Representative: Murgitroyd & Company

(56) References cited:
- US-A1- 2020 057 916

## Description

The disclosure relates to a method and an electronic device for object detection, and related computer-readable storage medium.
US2020/0057916A1 relates to image identification apparatus.

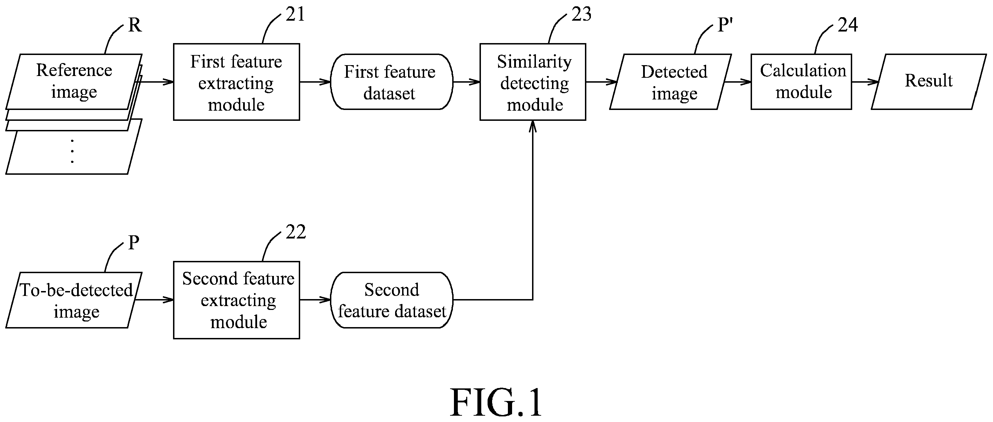

Figure 1 illustrates a conventional process for detecting a quantity of instance(s) of a target object in an image. In use, when it is desired to process a to-be-detected image (P) to detect a quantity of instance(s) of the target object included therein, a first feature extracting module 21 (which may be included in a computer device) performs a first extracting action on each of a plurality of reference images (R) (which may be pre-stored in the computer device and each of which is associated with the target object), so as to obtain a first feature dataset associated with instances of the target object in the reference images (R). Then, a second feature extracting module 22 (which may be included in the computer device) performs a second extracting action on the to-be-detected image (P) (which may be received by the computer device), so as to obtain a second feature dataset associated with one or more instances of the target object in the to-be-detected image (P). Then, a similarity detecting module 23 (which may be included in the computer device) performs a detecting action based on the first feature dataset and the second feature dataset, and generates a detected image (P') from the to-be-detected image (P) that includes a mark on every instance of the target object detected in the to-be-detected image (P). Then, a calculation module 24 (which may be included in the computer device) performs a calculation action to determine a quantity of the instance(s) of the target object in the detected image (P'), and outputs a result. Thus, the process for detecting a quantity of instances of a target object in an image is completed.

It is noted that each time the conventional process is to be implemented, the first extracting action needs to be performed on each of the reference images (R). This is time-consuming, thereby reducing the overall efficiency of the conventional process. Additionally, in some cases, the instances of the target object included in some of the reference images (R) may have very similar or even identical looks. As such, the first extracting action on those reference images (R) may not yield additional information about the target object, and the associated operations may be redundant.

Therefore, an object of the disclosure is to provide a method that can alleviate at least one of the drawbacks of the prior art.

According to one embodiment of the disclosure, there is provided a method according to Claim 1.

Another object of the disclosure is to provide an electronic device that is configured to implement the above-mentioned method.

According to one embodiment of the disclosure, there is provided an electronic device according to Claim 8.

Another object of the disclosure is to provide a computer-readable storage medium comprising instructions that would cause a processor to implement the above-mentioned method.

According to one embodiment of the disclosure, there is provided a computer-readable storage medium according to Claim 15.

Other features and advantages of the disclosure will become apparent in the following detailed description of the embodiment(s) with reference to the accompanying drawings. It is noted that various features may not be drawn to scale.
Figure 1 is a schematic diagram illustrating a conventional process for detecting a quantity of instance(s) of a target object in an image.
Figure 2 is a flow chart illustrating steps of a method for object detection according to one embodiment of disclosure.
Figure 3 is a block diagram illustrating components of an exemplary electronic device for object detection according to one embodiment of the disclosure.
Figure 4 illustrates a source image, which is used for obtaining a plurality of reference images.
Figure 5 illustrates an exemplary process flow of the operations included in a step of obtaining a first feature dataset related to a target object.
Figure 6 illustrates an exemplary process flow of the operations included in a detection process according to one embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

Throughout the disclosure, the term "coupled to" or "connected to" may refer to a direct connection among a plurality of electrical apparatus/devices/equipment via an electrically conductive material (e.g., an electrical wire), or an indirect connection between two electrical apparatus/devices/equipment via another one or more apparatus/devices/equipment, or wireless communication.

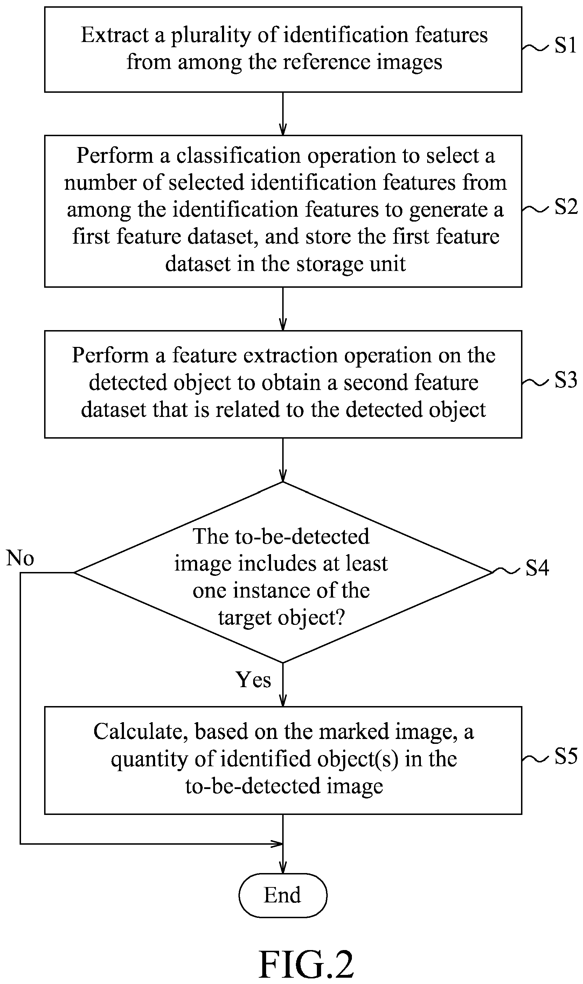

Figure 2 is a flow chart illustrating steps of a method for object detection according to one embodiment of disclosure. In this embodiment, the method is implemented using an electronic device.

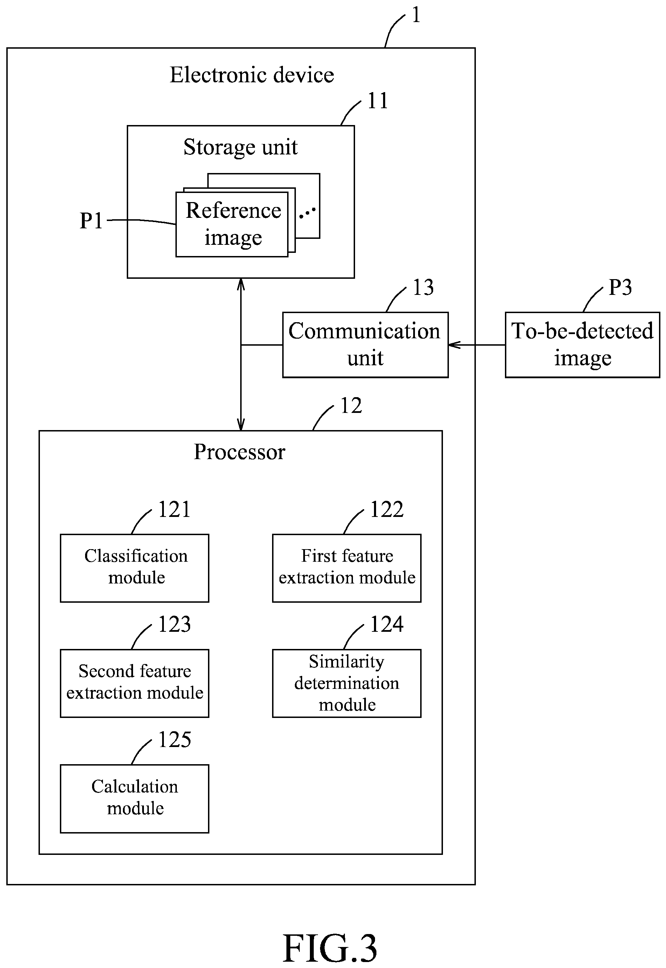

Figure 3 is a block diagram illustrating components of an exemplary electronic device 1 for object detection according to one embodiment of the disclosure. In embodiments, the electronic device 1 may be embodied using a server, a computer, a laptop, a tablet, a mobile device, etc., and includes a storage unit 11, a processor 12, and a communication unit 13.

The storage unit 11 may be embodied using, for example, random access memory (RAM), read only memory (ROM), programmable ROM (PROM), firmware, and/or flash memory, etc. The storage unit 11 stores a software application and a plurality of reference images P1 therein.

The processor 12 is connected to the storage unit 11, and may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), and/or a radio-frequency integrated circuit (RFIC), etc. The software application includes instructions that, when executed by the processor 12, cause the processor 12 to perform operations as described below. In the embodiment of Figure 3, the processor 12 executing different portions of the software application may serve as various modules, including a classification module 121, a first feature extraction module 122, a second feature extraction module 123, a similarity determination module 124, and a calculation module 125.

It is noted that in other embodiments, the modules included in the processor 12 may be embodied using one or more application-specific integrated circuit (ASIC) chips, one or more programmable logic devices (PLDs), or one or more microcontrollers each embedded with firmware. Each of the modules included in the processor 12 may be composed of a neural network model for performing the associated operations. For example, in some embodiments, each of the first feature extraction module 122 and the second feature extraction module 123 may be embodied using a you only look once (YOLO) neural network model, using convolutional neural network (CNN) structure as a backbone. The structure of the YOLO neural network model (the layers, the neurons and the associated parameters) composing the first feature extraction module 122 may be similar or identical to that composing the second feature extraction module 123, and therefore in some embodiments, the first feature extraction module 122 and the second feature extraction module 123 may be embodied using two identical modules. It is noted that in different applications, the first feature extraction module 122 and the second feature extraction module 123 may include different neural network models with different structures.

The communication unit 13 is connected to the processor 12, and may include one or more of a radio-frequency integrated circuit (RFIC), a short-range wireless communication module supporting a short-range wireless communication network using a wireless technology of Bluetooth^{®} and/or Wi-Fi, etc., and a mobile communication module supporting telecommunication using Long-Term Evolution (LTE), the third generation (3G), the fourth generation (4G) or fifth generation (5G) of wireless mobile telecommunications technology, or the like.

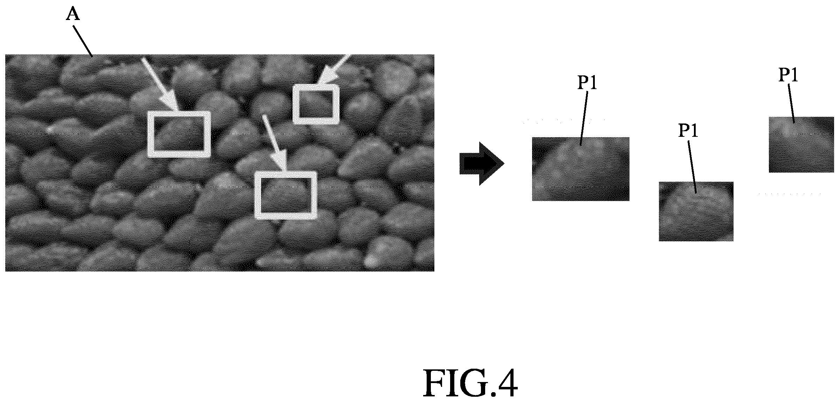

The plurality of reference images P1 are each related to a same target object. In an example shown in Figure 4, which illustrates a source image (A) that contains nothing but strawberries, the target object is "strawberry." But this disclosure is not limited to such example. In this embodiment, the plurality of reference images P1 may be pre-obtained by the processor 12 from the source image (A) (which may be pre-stored in the storage unit 11 or obtained via the communication unit 13). Specifically, a plurality of different areas of the source image (A), each including one recognizable instance of the target object, may be identified and cropped out to serve as the reference images P1. In some embodiments, the target objects are manually identified, while in some other embodiments, the target objects may be automatically identified using an object identification algorithm, and a result of the identification may be verified by a human.

In some embodiments, prior to the implementation of the method, a data augmentation operation may be performed by the processor 12 on one or more of the reference images P1, so as to generate at least one augmented image to serve as additional reference image(s) P1. The data augmentation operation may include one or more of a flipping (vertically or horizontally) operation, a rotating operation, a cropping operation, a resizing (enlarging or shrinking) operation, etc. It is noted that the data augmentation operation is well known in the related fields, and details thereof are omitted herein for the sake of brevity.

In use, when it is desired to perform an object detection operation on a to-be-detected image P3 to determine a quantity of object(s) included in the to-be-detected image P3 that is/are recognized as instance(s) of the target object, the method of Figure 2 may be implemented using the electronic device 1 as shown in Figure 3.

In step S1, the processor 12 extracts a plurality of identification features respectively from the reference images P1. In some embodiments, each of the identification features is related to a unique appearance-related characteristic (e.g., a shape, a texture, etc.) of the target object, but is not limited to such.

Specifically, the reference images P1 are inputted to the first feature extraction module 122 of the processor 12. In response, the first feature extraction module 122 performs a feature extraction operation on the reference images P1, and outputs a plurality of identification features. The identification features are then transmitted to the classification module 121 for further processing.

In step S2, in response to receipt of the identification features, the classification module 121 is configured to perform a classification operation to select a plurality of selected identification features P2 from among the identification features received from the first feature extraction module 122, so as to generate a first feature dataset using the selected identification features. It is noted that a quantity of the selected identification features P2 is smaller than a quantity of the identification features received from the first feature extraction module 122.

Specifically, in some embodiments, the first feature extraction module 122 is configured to, with respect to each of the identification features, assign the identification feature to one of a plurality of groups, based on an appearance-related characteristic of the instance of the target object to which the identification feature relates to. Each of the groups may be associated with a unique appearance-related characteristic of the target object, but is not limited to such. For each of the identification feature, the classification module 121 is configured to determine an appearance-related characteristic of the instance of the target object based on the identification features, and assign the identification feature to one of the groups based on the appearance-related characteristic thus determined. Accordingly, the instances of the target object indicated by the identification features that are assigned to the same group have the same or similar appearances-related characteristics. It is noted that the classification operation with respect to objects is readily known in the related art, and details thereof are omitted herein for the sake of brevity.

Then, the classification module 121 is configured to select one identification feature from each of the groups to serve as a selected identification feature P2. As such, a plurality of selected identification features P2 are selected respectively from the groups. In this manner, the subsequent operations may be done with respect to the selected identification features P2 instead of all of the identification features extracted from reference images P1, and therefore an amount of calculations needed for the method may be reduced without sacrificing the diversity of the information included in the reference images P1. As a result, the selected identification features P2 are related to different appearance-related characteristics of the target object, respectively. That is to say, among the reference images P1, the identification features that indicate appearance-related characteristics identical to that of the target object indicated by one of the selected identification features P2 may be discarded, and therefore the quantity of the selected identification features P2 is smaller than the quantity of identification features extracted by the first feature extraction module 122. It is noted that in other embodiments, various manners of selecting the selected identification features P2 may be employed, and this disclosure is not limited in this aspect. The selected identification features P2 obtained by the classification module 121 constitute the first feature dataset, which is then stored in the storage unit 11.

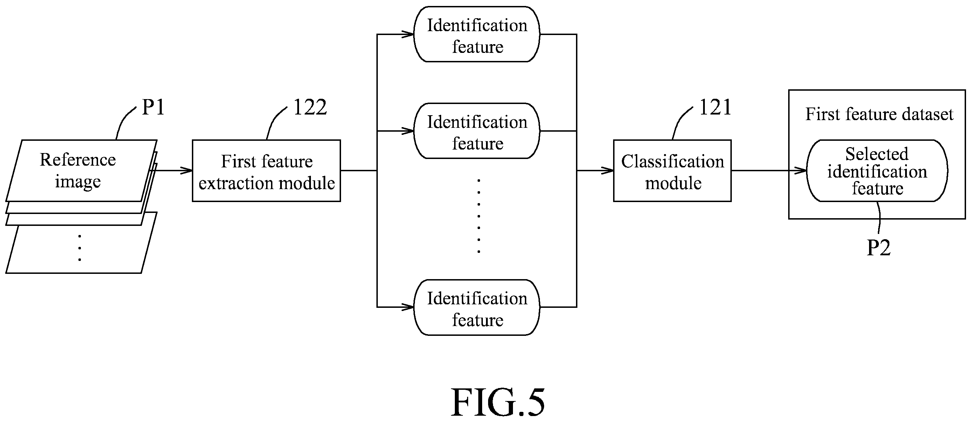

Figure 5 illustrates an exemplary process flow of the operations included in steps S1 and S2. In some embodiments, the content of the first feature dataset may include information of many instances of the target object indicated by the selected identification features P2, such as appearance-related characteristics (e.g., shape, texture, etc.). In this manner, a size of the first feature dataset may be reduced without compromising diversity of data from the reference images P1.

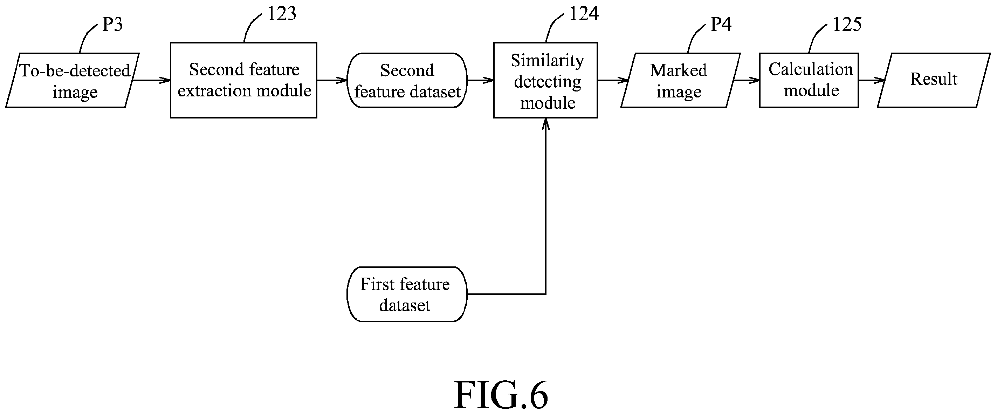

Further referring to Figure 6, after the first feature dataset has been generated and stored, the to-be-detected image P3, which may be obtained from the storage unit 11 or from a remote device via a network (e.g., the Internet), is inputted to the second feature extraction module 123. In response to receipt of the to-be-detected image P3, the processor 12 is configured to execute a detection process which includes steps S3 to S5.

Specifically, in step S3, for each object detected in the to-be-detected image P3 (hereinafter referred to as "detected object"), the second feature extraction module 123 performs a feature extraction operation on the detected object to obtain a second feature dataset that is related to the detected object, and then the second feature extraction module 123 transmits the second feature dataset(s) thus obtained to the similarity determination module 124.

In step S4, the similarity determination module 124 accesses the storage unit 11 to obtain the first feature dataset, and performs a similarity determination operation with respect to the to-be-detected image P3 based on the first feature dataset and the second feature dataset(s), so as to determine whether the to-be-detected image P3 includes at least one instance of the target object. Specifically, the similarity determination operation may include calculating, with respect to each of the selected identification features P2 included in the first feature dataset (i.e., each representing a unique appearance-related characteristic of the target object), a similarity score between an object represented by the second feature dataset (i.e., one detected object included in the to-be-detected image P3) and the object represented by the first feature dataset. It is noted that the operation of calculating a similarity score is readily known in the related art, and details thereof are omitted herein for the sake of brevity.

When a similarity score higher than a predetermined threshold is obtained, the similarity determination module 124 may determine that the object included in the to-be-detected image P3 is an instance of the target object. In practice, one or more detected objects may be determined by the similarity determination module 124 as instances of the target object (each of these detected objects are hereinafter referred to as "identified object").

In some embodiments, prior to performing the similarity determination operation, the similarity determination module 124 may first perform a normalization operation on the second feature datasets. This is done to ensure that the second feature datasets, which are to be compared with the first feature dataset, are normalized since different to-be-detected images may have different sizes.

In some embodiments, the similarity determination module 124 is further configured to label each identified object on the to-be-detected image P3 with a mark, so as to generate a marked image P4. In some embodiments, the mark may be in the form of a dot with a relatively light color.

On the other hand, when it is determined that no similarity score is higher than the predetermined threshold, it may be deduced that the to-be-detected image P3 does not include any instance of the target object (i.e., none of the detected objects in the to-be-detected image P3 is the target object), and the similarity determination module 124 may output a signal indicating that no target object is detected. It is noted that in the case where no target object is detected, the method is terminated at this instant.

Otherwise, in the case that at least one detected object in the to-be-detected image P3 is determined as an instance of the target object, the marked image P4 is generated based on the to-be-detected image P3 and transmitted to the calculation module 125.

In step S5, the calculation module 125 calculates, based on the marked image P4, a quantity of identified object(s) in the to-be-detected image P3 (i.e., calculating a number of instances of the target object in the to-be-detected image P3), and to output a result. Specifically, the calculation module 125 may include a peak detector algorithm (e.g., the function "peak_local_max") which is applied to the marked image P4 to identify the mark(s) in the marked image P4 that is/are labeled by the similarity determination module 124. As such, the calculation module 125 is configured to record the number of the mark(s) found in the marked image P4, which in turn equals the number of identified object(s) in the to-be-detected image P3. Afterward, the number of identified object(s) in the to-be-detected image P3 may be recorded and/or outputted as the quantity of instance(s) of the target object in the to-be-detected image P3 as the result, and the method is completed.

It is noted that while in this embodiment, the calculation of the quantity of identified object(s) in the to-be-detected image P3 is done by first generating a marked image P4, and then processing the marked image P4 to calculate the quantity of identified object(s), in other embodiments, the calculation of the quantity of identified object(s) may be done using other manners (e.g., using a heatmap), and this disclosure is not limited to the specific manner of calculation as described above.

It is noted that the above method may have the following advantages over the conventional process. Firstly, since the processor 12 is configured to select a plurality of selected identification features P2 from among the identification features extracted by the processor 12 from the reference images P1, in such a way that the number of the selected identification features P2 is smaller than the number of the identification features extracted by the processor 12, and that the selected identification features P2 still possess diversified instances of the target object, the operations may be performed with respect to fewer images, thereby increasing the efficiency without sacrificing the diversity of the data that is to be processed later and that is included in the first feature dataset. Additionally, after obtaining the first feature dataset that is related to the target object, the first feature dataset is stored in the data storage 11, and may be accessed whenever it is desired to process an image for detecting the same target object. In other words, later implementations of the method with respect to the same target object may omit steps S1 and S2, and only the detection process of steps S3 to S5 needs to be implemented in such cases. As a result, the resulting calculation for the subsequent implementations of the method with respect to the same target object may be greatly reduced.

In some embodiments, after one implementation of the method has completed, when it is desired to provide additional images of the target object as reference images P1 (for supplying additional information to the first feature dataset), the operations of steps S1 and S2 or operations similar to steps S1 and S2 may be implemented in response to receipt of one or more additional image (as one or more additional reference images P1) so as to update the first feature dataset, and to store the updated first feature dataset in the storage unit 11. That is to say, the first feature extraction module 122 may perform a feature extraction operation on the another reference image to obtain another identification feature, and the classification module 121 may then, based on the another identification feature (which may or may not be selected as another identification feature), update the first feature dataset, and store the updated first feature dataset in the storage unit 11.

In some embodiments, the additional images may be images that are cropped from the to-be-detected image P3 by the calculation module 125, and each of the additional images includes one recognizable instance of the target object. For example, after the one implementation of the method, the to-be-detected image P3 may be manually inspected and cropped to obtain a plurality of cropped images, each including one recognizable instance of the target object. Alternatively, the processor 12 may be configured to crop a part of the to-be-detected image P3 that contains an object which results in a similarity score higher than the predetermined threshold to obtain a cropped image.

To sum up, embodiments of the disclosure provide a method and an electronic device for performing object detection. In the method, a plurality of reference images each including one recognizable instance of a target object are processed, and then each of the reference images is assigned to one group based on an appearance-related characteristic of the instance of the target object included in the reference image. Then, a plurality of selected images are selected from among the reference images while ensuring the diversity of the appearance-related characteristic of the instances of the target object included in the selected images, with the number of the selected images being smaller than the number of the reference images. Then, the selected images are processed to obtain a first feature dataset, which is related to the target object and which is then stored for use when a to-be-detected image is desired to be processed to determine a quantity of instance(s) of the target object in the to-be-detected image. In this manner, the operations for obtaining the first feature dataset that is related to the target object may be done by processing fewer images, thereby increasing the processing efficiency without sacrificing the diversity of the data to be processed. In some cases, since the number of images to be processed has been reduced, the structures of the neural network models used for extracting features may be modified to be able to extract more features from each of the selected images, thereby increasing the accuracy of the eventual object detection.

According to one embodiment of the disclosure, there is provided a non-transitory computer-readable storage medium for performing the above-mentioned method of object detection. The non-transitory computer-readable storage medium may store a software application including instructions that, when executed by a processor of an electronic device, cause the processor to implement the operations as described in the steps of the method of Figure 2. In some embodiments, the non-transitory computer-readable storage medium may be in the form similar to the data storage 11 of the electronic device 1.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for object detection, the method being implemented using a processor (12) of an electronic device (1), **characterized in that** the method includes:
a) performing a feature extraction operation (S2) on a plurality of reference images (P1), and extracting a plurality of identification features respectively from the reference images (S1, P1), wherein the reference images (P1) are all related to a same target object and each include one instance of the target object;
b) performing (S2) a classification operation to select a plurality of selected identification features from among the identification features so as to obtain a first feature dataset that is related to the instances of the target object indicated by the selected identification features, and storing the first feature dataset in a storage unit (11), wherein a quantity of selected identification features is smaller than a quantity of the identification features;
c) in response to receipt of a to-be-detected image (P3), perform a feature extraction operation (S3) on the to-be-detected image (P3) to obtain a second feature dataset;
d) accessing the storage unit (11) to obtain the first feature dataset, and performing a similarity determination operation with respect to the to-be-detected image (P3) based on the first feature dataset and the second feature dataset, so as to determine whether the to-be-detected image (P3) includes at least one instance of the target object; and
e) when it is determined that the to-be-detected image (P3) includes at least one instance of the target object calculating a quantity of instances of the target object in the to-be-detected image (S4. P3);
wherein in step a), each of the identification features is related to an appearance-related characteristic of the target object, and step b) is implemented in a manner that each of the selected identification features is related to a unique appearance-related characteristic of the target object; and
wherein step b) includes
with respect to each of the identification features, assigning the identification feature to one of a plurality of groups, based on an appearance-related characteristic of the instance of the target object indicated by the identification feature, and
selecting one identification feature from each of the groups to serve as one of the plurality of selected identification features.

2. The method as claimed in Claim 1, further comprising:
in response to receipt of an additional image as another reference image, repeating steps a) and b) so as to update the first feature dataset.

3. The method as claimed in Claim 2, wherein the additional image is cropped from the to-be-detected image (P3), and includes one instance of the target object.

4. The method as claimed in any one of Claims 1 to 3, further comprising, prior to step a):
performing a data augmentation operation on one or more of the reference images (P1), so as to generate at least one augmented image to serve as another reference image (P1),
wherein the data augmentation operation includes one or more of a vertical flipping operation, a horizontal flipping operation, a rotating operation, a cropping operation, and a resizing operation.

5. The method as claimed any one of Claims 1 to 4, wherein step e) includes generating a marked image based on the to-be-detected image (P3), wherein the marked image has each of the at least one instance of the target object marked, and calculating, based on the marked image, a quantity of instance(s) of the target object in the to-be-detected image (P3).

6. An electronic device (1) for object detection, **characterized by**:
a storage unit (11) storing a plurality of reference images (P1), the reference images (P1) all relating to a same target object and each including an instance of the target object;
a first feature extraction module (122) that performs a feature extraction operation on the reference images (P1), so as to obtain a plurality of identification features related to the target object;
a classification module (121) that selects a plurality of selected identification features from among the plurality of identification features, so as to obtain a first feature dataset that is related to the target object and that is stored in the storage unit (11), a quantity of the selected identification features being smaller than a quantity of the identification features;
a second feature extraction module (123) that, in response to receipt of a to-be-detected image (P3), performs a feature extraction operation on the to-be-detected image (P3) to obtain a second feature dataset;
a similarity determination module (124) that accesses the storage unit (11) to obtain the first feature dataset, that receives the second feature dataset from the second feature extraction module (123), and that performs a similarity determination operation with respect to the to-be-detected image (P3) based on the first feature dataset and the second feature dataset, so as to determine whether the to-be-detected image (P3) includes at least one instance of the target object; and
a calculation module (125) that, when the to-be-detected image (P3) includes at least one instance of the target object, calculates a quantity of instance(s) of the target object in the to-be-detected image (P3);
wherein the first feature extraction module (122) extracts each of the identification features that is related to an appearance-related characteristic of the target object, and the classification module (121) selects each of the selected identification features that is related to a unique appearance-related characteristic of the target object; and
wherein the classification module (121):
with respect to each of the identification features, assigns the identification features to one of a plurality of groups, based on an appearance-related characteristic of the instance of the target object indicated by the identification feature; and
selects one identification feature from each of the groups to serve as one of the plurality of selected identification features.

7. The electronic device (1) as claimed in Claim 6, wherein, in response to receipt of an additional image as another reference image, the first feature extraction module (122) performs a feature extraction operation on the another reference image (P1) to obtain another identification feature, and the classification module (121), based on the another identification feature, updates the first feature dataset, and stores the updated first feature dataset in the storage unit (11).

8. The electronic device (1) as claimed in Claim 7, wherein the additional image is cropped from the to-be-detected image (P3) by the calculation module (125), and includes one instance of the target object.

9. The electronic device (1) as claimed in any one of Claims 6 to 8, further comprising a processor (12) that performs a data augmentation operation on one or more of the reference images (P1), so as to generate at least one augmented image to serve as another reference image (P1), wherein the data augmentation operation includes one or more of a vertical flipping operation, a horizontal flipping operation, a rotating operation, a cropping operation, and a resizing operation.

10. The electronic device (1) as claimed in any one of Claims 6 to 9, wherein:
when the to-be-detected image (P3) includes at least one instance of the target object, the similarity determination module (124) generates a marked image based on the to-be-detected image (P3), wherein the marked image has each of the at least one instance of the target object marked; and
the calculation module calculates (125), based on the marked image, the quantity of instance(s) of the target object in the to-be-detected image (P3).

11. A non-transitory computer-readable storage medium comprising instructions that, when executed by a processor (12) of an electronic device (1), cause the processor (12) to implement steps of the method of Claim 1.

## Patentansprüche

1. Verfahren zur Objekterkennung, wobei das Verfahren unter Verwendung eines Prozessors (12) eines elektronischen Geräts (1) implementiert wird, **dadurch gekennzeichnet, dass** das Verfahren Folgendes umfasst:
a) Durchführen eines Merkmalsextraktionsbetriebs (S2) an einer Vielzahl von Referenzbildern (P1) und jeweiliges Extrahieren einer Vielzahl von Identifizierungsmerkmalen aus den Referenzbildern (S1, P1), wobei die Referenzbilder (P1) sich alle auf dasselbe Zielobjekt beziehen und jeweils eine Instanz des Zielobjekts enthalten;
b) Durchführen (S2) eines Klassifizierungsbetriebs, um eine Vielzahl von ausgewählten Identifizierungsmerkmalen aus den Identifizierungsmerkmalen auszuwählen, um einen ersten Merkmalsdatensatz zu erhalten, der sich auf die durch die ausgewählten Identifizierungsmerkmale angezeigten Instanzen des Zielobjekts bezieht, und Speichern des ersten Merkmalsdatensatzes in einer Speichereinheit (11), wobei eine Menge der ausgewählten Identifizierungsmerkmale kleiner als eine Mange der Identifizierungsmerkmale ist;
c) als Reaktion auf den Empfang eines zu erkennenden Bildes (P3), Durchführen eines Merkmalsextraktionsbetriebs (S3) an dem zu erkennenden Bild (P3), um einen zweiten Merkmalsdatensatz zu erhalten;
d) Zugreifen auf die Speichereinheit (11), um den ersten Merkmalsdatensatz zu erhalten und Durchführen eines Ähnlichkeitsbestimmungsbetriebs in Bezug auf das zu erkennende Bild (P3) basierend auf dem ersten Merkmalsdatensatz und dem zweiten Merkmalsdatensatz, um festzustellen, ob das zu erkennende Bild (P3) mindestens eine Instanz des Zielobjekts enthält; und
e) wenn festgestellt wird, dass das zu erkennende Bild (P3) mindestens eine Instanz des Zielobjekts enthält, Berechnen einer Menge der Instanzen des Zielobjekts im zu erkennenden Bild (S4. P3);
wobei in Schritt a) jedes der Identifizierungsmerkmale sich auf ein erscheinungsbezogenen Merkmal des Zielobjekts bezieht und Schritt b) so implementiert wird, dass jedes der ausgewählten Identifizierungsmerkmale sich auf ein eindeutiges erscheinungsbezogenes Merkmal des Zielobjekts bezieht; und
wobei Schritt b) Folgendes umfasst
mit Bezug auf jedes der Identifizierungsmerkmale, Zuordnen des Identifizierungsmerkmals zu einer von einer Vielzahl von Gruppen basierend auf einem erscheinungsbezogenen Merkmal der Instanz des Zielobjekts, das von dem Identifizierungsmerkmal angezeigt wird, und
Auswählen eines Identifizierungsmerkmals aus jeder der Gruppen, um als eines der Vielzahl von ausgewahlten Identifizierungsmerkmalen zu dienen.

2. Verfahren nach Anspruch 1, ferner umfassend:
als Reaktion auf den Empfang eines zusätzliches Bildes als ein anderes Referenzbild, Wiederholen der Schritte a) und b), um den ersten Merkmalsdatensatz zu aktualisieren.

3. Verfahren nach Anspruch 2, wobei das zusätzliche Bild aus dem zu erfassenden Bild (P3) ausgeschnitten wird und eine Instanz des Zielobjekts enthält.

4. Verfahren nach einem der Ansprüche 1 bis 3, ferner umfassend, vor Schritt a):
Durchführen eines Datenvergrößerungsbetriebs an einem oder mehreren der Referenzbilder (P1), um mindestens ein vergrößertes Bild zu erzeugen, um als anderes Referenzbild (P1) zu dienen,
wobei der Datenvergrößerungsbetrieb einen oder mehrere der folgenden Betriebe umfasst: vertikales Spiegeln, horizontales Spiegeln, Drehen, Zuschneiden und Größenänderung.

5. Verfahren nach einem der Ansprüche 1 bis 4, wobei Schritt e) Folgendes umfasst:
Erzeugen eines markierten Bildes basierend auf dem zu erkennenden Bild (P3), wobei in dem markierten Bild jede der mindestens einen Instanz des Zielobjekts markiert ist, und Berechnen einer Menge von Instanzen des Zielobjekts in dem zu erkennenden Bild (P3) basierend auf dem markierten Bild.

6. Elektronisches Gerät (1) zur Objekterkennung, **gekennzeichnet durch**:
eine Speichereinheit (11), die eine Vielzahl von Referenzbildern (P1) speichert, wobei sich die Referenzbilder (P1) alle auf dasselbe Zielobjekt beziehen und jeweils eine Instanz des Zielobjekts enthalten;
ein erstes Merkmalsextraktionsmodul (122), das einen Merkmalsextraktionsbetrieb an den Referenzbildern (P1) durchführt, um eine Vielzahl von Identifizierungsmerkmalen zu erhalten, die sich auf das Zielobjekt beziehen;
ein Klassifizierungsmodul (121), das eine Vielzahl von ausgewählten Identifizierungsmerkmalen aus der Vielzahl von Identifizierungsmerkmalen auswählt, um einen ersten Merkmalsdatensatz zu erhalten, der sich auf das Zielobjekt bezieht und in der Speichereinheit (11) gespeichert ist, wobei eine Menge der ausgewählten Identifizierungsmerkmale kleiner ist als eine Menge der Identifizierungsmerkmale;
ein zweites Merkmalsextraktionsmodul (123), das als Reaktion auf den Empfang eines zu erkennenden Bildes (P3) einen Merkmalsextraktionsbetrieb an dem zu erkennenden Bild (P3) durchführt, um einen zweiten Merkmalsdatensatz zu erhalten;
ein Ähnlichkeitsbestimmungsmodul (124), das auf die Speichereinheit (11) zugreift, um den ersten Merkmalsdatensatz zu erhalten, das das den zweiten Merkmalsdatensatz von dem zweiten Merkmalsextraktionsmodul (123) empfängt und das einen Ähnlichkeitsbestimmungsbetrieb mit Bezug auf das zu erkennende Bild (P3) basierend auf dem ersten Merkmalsdatensatz und dem zweiten Merkmalsdatensatz durchführt, um festzustellen, ob das zu erfassende Bild (P3) mindestens eine Instanz des Zielobjekts enthält; und
ein Berechnungsmodul (125), das, wenn das zu erfassende Bild (P3) mindestens eine Instanz des Zielobjekts enthält, eine Menge der Instanzen des Zielobjekts in dem zu erfassenden Bild (P3) berechnet;
wobei das erste Merkmalsextraktionsmodul (122) jedes der Identifizierungsmerkmale extrahiert, das sich auf ein erscheinungsbezogenes Merkmal des Zielobjekts bezieht, und das Klassifizierungsmodul (121) jedes der ausgewählten Identifizierungsmerkmale auswählt, das sich auf ein eindeutiges erscheinungsbezogenen Merkmal des Zielobjekts bezieht; und
wobei das Klassifizierungsmodul (121):
in Bezug auf jedes der Identifizierungsmerkmale, die Identifizierungsmerkmale einer von einer Vielzahl von Gruppen zuordnet, basierend auf einem erscheinungsbezogenen Merkmal der Instanz des Zielobjekts, das von dem Identifizierungsmerkmal angezeigt wird; und
aus jeder der Gruppen ein Identifizierungsmerkmal auswählt, um als eines der Vielzahl von ausgewählten Identifizierungsmerkmalen zu dienen.

7. Elektronisches Gerät (1) nach Anspruch 6, wobei das erste Merkmalsextraktionsmodul (122) als Reaktion auf den Empfang eines zusätzlichen Bildes als anderes Referenzbild einen Merkmalsextraktionsbetrieb an dem anderen Referenzbild (P1) durchführt, um ein anderes Identifizierungsmerkmal zu erhalten, und das Klassifizierungsmodul (121) basierend auf dem weiteren Identifizierungsmerkmal den ersten Merkmalsdatensatz aktualisiert und den aktualisierten ersten Merkmalsdatensatz in der Speichereinheit (11) speichert.

8. Elektronisches Gerät (1) nach Anspruch 7, wobei das zusätzliche Bild durch das Berechnungsmodul (125) aus dem zu erfassenden Bild (P3) ausgeschnitten wird und eine Instanz des Zielobjekts enthält.

9. Elektronisches Gerät (1) nach einem der Ansprüche 6 bis 8, ferner umfassend einen Prozessor (12), der einen Datenvergrößerungsbetrieb an einem oder mehreren der Referenzbilder (P1) durchführt, um mindestens ein vergrößertes Bild zu erzeugen, das als ein anderes Referenzbild (P1) dient, wobei der Datenvergrößerungsbetrieb einen oder mehrere der folgenden Betriebe umfasst: vertikales Spiegeln, horizontales Spiegeln, Drehen, Zuschneiden und Größenänderung.

10. Elektronisches Gerät (1) nach einem der Ansprüche 6 bis 9, wobei:
wenn das zu erfassende Bild (P3) mindestens eine Instanz des Zielobjekts enthält, das Ähnlichkeitsbestimmungsmodul (124) ein markiertes Bild basierend auf dem zu erfassenden Bild erzeugt, wobei in dem markierten Bild jede der mindestens einen Instanz des Zielobjekts markiert ist; und
das Berechnungsmodul basierend auf dem markierten Bild die Menge der Instanzen des Zielobjekts in dem zu erfassenden Bild (P3) berechnet (125).

11. Nichtflüchtiges, computerlesbares Speichermedium umfassend Anweisungen, die, wenn sie von einem Prozessor (12) eines elektronischen Geräts (1) ausgeführt werden, den Prozessor (12) veranlassen, Schritte des Verfahrens nach Anspruch 1 zu implementieren.

## Revendications

1. Procédé de détection d'objets, le procédé étant mis en œuvre à l'aide d'un processeur (12) d'un dispositif électronique (1), **caractérisé en ce que** le procédé comprend :
a) la réalisation d'une opération d'extraction de caractéristique (S2) sur une pluralité d'images de référence (P1), et l'extraction d'une pluralité de caractéristiques d'identification respectivement à partir des images de référence (S1, P1), les images de référence (P1) étant toutes liées à un même objet cible et comprenant chacune une instance de l'objet cible ;
b) la réalisation (S2) d'une opération de classification afin de sélectionner une pluralité de caractéristiques d'identification parmi les caractéristiques d'identification, de manière à obtenir un premier ensemble de données de caractéristiques associé aux instances de l'objet cible indiquées par les caractéristiques d'identification sélectionnées, et le stockage du premier ensemble de données de caractéristiques dans une unité de stockage (11), le nombre de caractéristiques d'identification sélectionnées étant inférieur au nombre total de caractéristiques d'identification ;
c) en réponse à la réception d'une image à détecter (P3), la réalisation d'une opération d'extraction de caractéristique (S3) sur l'image à détecter (P3) afin d'obtenir un second ensemble de données de caractéristiques ;
d) l'accès à l'unité de stockage (11) pour obtenir le premier ensemble de données de caractéristiques, et la réalisation d'une opération de détermination de similarité par rapport à l'image à détecter (P3) sur la base du premier ensemble de données de caractéristiques et du second ensemble de données de caractéristiques, afin de déterminer si l'image à détecter (P3) comprend au moins une instance de l'objet cible ; et
e) lorsqu'il est établi que l'image à détecter (P3) comprend au moins une instance de l'objet cible, le calcul du nombre d'instances de l'objet cible dans l'image à détecter (S4. P3) ;
dans lequel, à l'étape a), chacune des caractéristiques d'identification est associée à une caractéristique liée à l'apparence de l'objet cible, et l'étape b) est mise en œuvre de telle sorte que chacune des caractéristiques d'identification sélectionnées soit associée à une unique caractéristique liée à l'apparence de l'objet cible ; et
dans lequel l'étape b) comprend
concernant chacune des caractéristiques d'identification, l'attribution de la caractéristique d'identification à l'un d'une pluralité de groupes, sur la base d'une caractéristique liée à l'apparence de l'instance de l'objet cible indiquée par la caractéristique d'identification, et
la sélection d'une caractéristique d'identification dans chacun des groupes pour qu'elle fasse partie de la pluralité des caractéristiques d'identification sélectionnées.

2. Procédé selon la revendication 1, comprenant en outre :
en réponse à la réception d'une image supplémentaire servant d'autre image de référence, la répétition des étapes a) et b) afin de mettre à jour le premier ensemble de données de caractéristiques.

3. Procédé selon la revendication 2, dans lequel l'image supplémentaire est recadrée à partir de l'image à détecter (P3) et comprend une instance de l'objet cible.

4. Procédé selon l'une quelconque des revendications 1 à 3, comprenant en outre, avant l'étape a) :
la réalisation d'une opération d'enrichissement de données sur une ou plusieurs des images de référence (P1), de manière à générer au moins une image augmentée destinée à servir d'autre image de référence (P1),
dans lequel l'opération d'enrichissement de données comprend une ou plusieurs parmi une opération de retournement vertical, opération de retournement horizontal, opération de rotation, opération de recadrage et opération de redimensionnement.

5. Procédé selon l'une quelconque des revendications 1 à 4, dans lequel l'étape e) comprend la génération d'une image marquée sur la base de l'image à détecter (P3), l'image marquée comportant chacune de l'au moins une instance de l'objet cible marqué, et le calcul, sur la base de l'image marquée, du nombre d'instances de l'objet cible présentes dans l'image à détecter (P3).

6. Dispositif électronique (1) de détection d'objets, **caractérisé par** :
une unité de stockage (11) stockant une pluralité d'images de référence (P1), les images de référence (P1) se rapportant toutes à un même objet cible et comprenant chacune une instance de l'objet cible ;
un premier module d'extraction de caractéristique (122) qui réalise une opération d'extraction de caractéristique sur les images de référence (P1), de manière à obtenir une pluralité de caractéristiques d'identification liées à l'objet cible ;
un module de classification (121) qui sélectionne une pluralité de caractéristiques d'identification sélectionnées parmi la pluralité de caractéristiques d'identification, de manière à obtenir un premier ensemble de données de caractéristiques lié à l'objet cible et stocké dans l'unité de stockage (11), le nombre de caractéristiques d'identification sélectionnées étant inférieur au nombre de caractéristiques d'identification ;
un second module d'extraction de caractéristique (123) qui, en réponse à la réception d'une image à détecter (P3), réalise une opération d'extraction de caractéristique sur l'image à détecter (P3) afin d'obtenir un second ensemble de données de caractéristiques ;
un module de détermination de similarité (124) qui accède à l'unité de stockage (11) pour obtenir le premier ensemble de données de caractéristiques, qui reçoit le second ensemble de données de caractéristiques provenant du second module d'extraction de caractéristique (123), et qui réalise une opération de détermination de similarité concernant l'image à détecter (P3), sur la base du premier ensemble de données de caractéristiques et du second ensemble de données de caractéristiques, afin de déterminer si l'image à détecter (P3) comprend au moins une instance de l'objet cible ; et
un module de calcul (125) qui, lorsque l'image à détecter (P3) comprend au moins une instance de l'objet cible, calcule le nombre d'instances de l'objet cible présentes dans l'image à détecter (P3) ;
dans lequel le premier module d'extraction de caractéristique (122) extrait chacune des caractéristiques d'identification liées à une caractéristique liée à l'apparence de l'objet cible, et le module de classification (121) sélectionne chacune des caractéristiques d'identification sélectionnées qui est liée à une unique caractéristique liée à l'apparence de l'objet cible ; et
dans lequel le module de classification (121) :
concernant chacune des caractéristiques d'identification, attribue les caractéristiques d'identification à l'un d'une pluralité de groupes, sur la base d'une caractéristique liée à l'apparence de l'instance de l'objet cible indiquée par la caractéristique d'identification ; et
sélectionne une caractéristique d'identification dans chacun des groupes pour qu'elle fasse partie
de la pluralité de caractéristiques d'identification sélectionnées.

7. Dispositif électronique (1) selon la revendication 6, dans lequel, en réponse à la réception d'une image supplémentaire servant d'autre image de référence, le premier module d'extraction de caractéristique (122) réalise une opération d'extraction de caractéristique sur l'autre image de référence (P1) afin d'obtenir une autre caractéristique d'identification, et le module de classification (121), sur la base de cette autre caractéristique d'identification, met à jour le premier ensemble de données de caractéristiques et stocke le premier ensemble de données de caractéristiques mis à jour dans l'unité de stockage (11).

8. Dispositif électronique (1) selon la revendication 7, dans lequel l'image supplémentaire est recadrée à partir de l'image à détecter (P3) par le module de calcul (125), et comprend une instance de l'objet cible.

9. Dispositif électronique (1) selon l'une quelconque des revendications 6 à 8, comprenant en outre un processeur (12) qui réalise une opération d'enrichissement des données sur une ou plusieurs des images de référence (P1), de manière à générer au moins une image enrichie destinée à servir d'autre image de référence (P1), dans lequel l'opération d'enrichissement des données comprend une ou plusieurs parmi une opération de retournement vertical, opération de retournement horizontal, opération de rotation, opération de recadrage et opération de redimensionnement.

10. Dispositif électronique (1) selon l'une quelconque des revendications 6 à 9, dans lequel : lorsque l'image à détecter (P3) comprend au moins une instance de l'objet cible, le module de détermination de la similarité (124) génère une image marquée sur la base de l'image à détecter (P3), l'image marquée comportant chacune de l'au moins une instance de l'objet cible ; et
le module de calcul calcule (125), sur la base de l'image marquée, le nombre d'instances de l'objet cible dans l'image à détecter (P3).

11. Support de stockage non transitoire lisible par ordinateur, comprenant des instructions qui, lorsqu'elles sont exécutées par un processeur (12) d'un dispositif électronique (1), amènent le processeur (12) à mettre en œuvre les étapes du procédé selon la revendication 1.
